# EUROPEAN PATENT APPLICATION

(11) **EP 4 578 593 A1**
(43) Date of publication of application: **02.07.2025**
(21) Application number: 23220445.3
(22) Date of filing: 28.12.2023
(51) Int. Cl.: B23K 35/30, B23K 1/00, C22C 5/08, C22C 9/00, H01H 1/023

(54) **PROCESS FOR JOINING SILVER-GRAPHITE TO COPPER CARRIERS**

(71) Applicant: ABB SCHWEIZ AG, 5400 Baden (CH)
(72) Inventor: HOIDIS, Markus, 5443 Niederrohrdorf (CH); KENEL, Christoph, 5400 Baden (CH); LANG, Cornelia, 5212 Hausen AG (CH); OPPLIGER, Jean-Marc, 5442 Fislisbach (CH); PAUL, Anish, 5200 Brugg (CH)
(74) Representative: Maiwald GmbH

(57) **Abstract**

Process of directly connecting a silver-graphite contact with a copper carrier comprising the preparation of an intermediate under controlled conditions.

## Description

### Field of the Invention

The present invention concerns a process for joining silver-graphite to copper carriers, silver-graphite contacts being coated with a braze, copper carriers being coated with a braze, as well as joints produced by the process.

### Background

Silver-graphite contacts are powder metal composites of silver and typically 1 to 6 wt.-% graphite. Usually silver-graphite contacts are made by press-sinter repress or extrusion to high density with good switching properties of welding resistance, low contact resistance, and good lubricity in sliding applications. When using silver-graphite contacts, the joining of copper carriers bears several problems. Conventional braze alloys, typically of the Cu-Ag-P family, wet only the metallic part of the contact, but do not form any bond with the contained graphite. Neither pure silver nor copper (and their binary alloys) wet graphite as there is no chemical reaction. This reduces the bonded area, leaving a joint that has both low strength and high electrical resistance. In practice, this issue is solved by ensuring no graphite is present in the layer that is to be wetted by the braze. There are a multitude of approaches to achieve this, including joining a layer of Ag to the contact (e.g., by rolling or plating) or decarburizing the contact by heat treatment in air. This removes the graphite as it is oxidized and forms CO₂ gas, leaves behind a porous Ag layer that then densifies into an Ag layer. This operation adds cost due to additional processing steps during contact manufacturing and by adding an expensive material, especially as this layer does not contribute towards the useful volume of contact material as it lacks the required reinforcement. EP4254452 has also described a method comprising a processing step separate from brazing, which produces a coated silver-graphite contact that is suitable for being stored and being brazed at a later point. According to EP4254452 the active braze is applied to the silver-graphite contact in the form of a powder and/or paste and/or foil, whereby the step of applying is performed prior to the application of heat for brazing. In the exemplified embodiments, the step of applying the braze and the step of brazing were combined. Such method bears limitations with respect to quality of the final braze and brazing speed for industrial manufacturing.

The present invention is based on the finding that a two-step process including an optimized coating step and subsequent thereto a brazing step addresses those problems.

### Summary of the Invention

The present invention provides
a process of connecting a silver-graphite contact with a copper carrier comprising the steps of
a) coating the silver-graphite contact with a braze at a temperature of at least the solidus temperature of the braze minus 100 K,
   whereby the braze contains
   aa) one or several of Ti, Hf, Zr, Cr, Si and/or V and, further contains
   bb) Cu in an amount of 24.0 wt.-% to 50.0 wt.-% with respect to the total weight of the braze, with
   cc) the remainder being one or several of Ag, In, Sn and/or Ni, thereby producing an intermediate, and thereafter,
b) brazing the copper carrier onto the intermediate.

The present invention further provides
a silver-graphite contact being coated with a braze, whereby the braze contains
aa) one or several of Ti, Hf, Zr, Cr, Si and/or V and, further contains
bb) Cu in an amount of 24.0 wt.-% to 50.0 wt.-% with respect to the total weight of the braze, with
cc) the remainder being one or several of Ag, In, Sn and/or Ni,
obtainable by coating the silver-graphite contact with the braze at a temperature of at least the solidus temperature of the braze minus 100 K,
preferably obtainable by coating the silver-graphite contact with the braze under one or more, more preferably under all the following conditions:
   a) at a temperature above the solidus temperature of the braze;
   b) at a temperature of less than 80 K above the solidus temperature of the braze;
   c) in a low oxygen environment, such as reduced pressure, preferably under protective atmosphere such as under argon;
   d) for a time of at least 30 seconds;
   e) for a time less than one hour.

In a further aspect, the present invention provides a joint made by the process of connecting a silver-graphite contact with a copper carrier as described herein.

The brazing as described herein is frequently also denoted active brazing. "Active" indicates the addition of an active element or a mixture of several to the braze. An element is an "active element" if it shows significant affinity to carbon or more specifically graphite. Suitable elements include Ti, Hf, Zr, Cr, Si and V that all form stable metal carbides. The heat of formation provides a good indication: the more negative, the heat of formation, the higher the affinity. A heat of formation of at least -5 kcal/mol and lower may be sufficient. Without being wished to be bound by theory, it is believed that if incorporated in the braze, those elements react with the exposed carbon from the contact material, thereby locally forming metal carbides. These layers are growing on the and into the graphite, thus adhere well, but are also wetted by the metallic braze. The present invention has surprisingly found that controlled conditions for the coating step improve adherence and quality of the intermediate. It is also possible to screen the intermediate by a quality process step.

The brazing as described herein is direct brazing. This means that except for the braze, no material layers are added between the silver-graphite contact and the copper carrier. Thus, no backing layers need to be present. In other words, the process as described herein is characterized by the absence of introducing one or more backing layers. The same holds for the silver-graphite contact being coated by the braze. This product, i.e., the intermediate does not contain backing layers. The same holds true for the joint as described herein.

In the process according to the present invention, the step of coating the silver-graphite contact with the braze thereby producing an intermediate is preferably carried out under one or more, more preferably under all the following conditions:
a) at a temperature above the solidus temperature of the braze;
b) at a temperature of less than 80 K above the solidus temperature of the braze;
c) in a low oxygen environment, such as reduced pressure, preferably under protective atmosphere such as under argon;
d) for a time of at least 30 seconds;
e) for a time less than one hour.

For example, when the solidus temperature of the braze is 780 °C, the step of coating the silver-graphite contact with the braze thereby producing an intermediate is preferably carried out within a temperature range of 780 °C to 860°C.

A low oxygen environment such as provided by a protective atmosphere is particularly preferred as the removal of graphite via oxidation and generation of CO₂ gas is suppressed. Moreover, the reaction of active elements with oxygen instead of the reaction with silver-graphite is prevented.

Preferred time ranges for the step of coating the silver-graphite contact with the braze thereby producing an intermediate are 60 seconds to 30 minutes, and particularly 2 minutes to 10 minutes.

In the process according to the present invention the brazing of the copper carrier onto the intermediate is performed under one or more, preferably under all the following conditions:
a) at a temperature of 500 °C to 1000 °C;
b) over a time of up to 5 min above solidus, preferably less than 10 s above solidus, even more preferably less than 5 s above solidus and most preferably less than 2 s above solidus.

In an embodiment of the process, the brazing of the copper carrier onto the intermediate may be carried out by using a conveyor belt furnace. It is also possible that intermediate is preheated for a certain time at a temperature equal or below the temperature used for coating. For example, the intermediate may be preheated for half an hour at 450 °C, and then subjected to brazing for a time of less than 2 s above solidus.

It should be understood that the first step of coating enables very short and beneficial times for the brazing step. This renders the process as described herein particularly suitable for industrial applications.

Usually only one of the suitable elements Ti, Hf, Zr, Cr, Si and V that all form stable metal carbides will be present in the braze.

The total weight amount of Ti, Hf, Zr, Cr, Si and/or V is preferably between 1.0 and 10.0 wt.-%, more preferably between 1.0 and 6.0 wt.-%, most preferably between 1.1 and 5.0 wt.-% with respect to the total weight of the braze.

It is particularly preferred that the braze as described herein is an alloy. It is further preferred that the intermediate is characterized by chemical bonding between the silver-graphite contact and the braze. Preferably such chemical bonding will be caused by locally formed metal carbides. Such domains of metal carbides growing on the and into the graphite, provide outstanding adherence but are also wetted by the metallic braze.

It is more preferred that the braze has a solidus temperature of less than 850 °C, still more preferably less than 800°C and most preferably less than 650°C.

The step of coating the silver-graphite contact with the braze thereby producing an intermediate is preferably carried out at a temperature of up to 950 °C. Depending on the solidus temperature of the braze, lower temperatures may be used.

The step of coating the silver-graphite contact with the braze thereby producing an intermediate thereby producing a carrier intermediate can be performed in protective gas, vacuum or, less preferably air, with heat provided through resistive or inductive heating or in a furnace.

The braze for producing an intermediate can be a braze powder, braze paste or a braze foil. This allows the braze to be placed independently from the later brazing operation. Braze paste can be provided by combining the braze with a binder as known in the art.

The intermediate is preferably brazed to the copper carrier by inductive, resistive or furnace heating.

It is particularly advantageous that this second step, i.e., the step of brazing the intermediate does not require sophisticated process conditions: the brazing can be performed in protective gas or vacuum to minimize the risk of oxidation by resistive heating. However, it is also possible and has been shown experimentally that inductive or resistive heating in air is acceptable. Surprisingly, the reaction between braze and contact was quick enough such that no significant oxidation occurred.

Typically, the brazing will be achieved in less than 10 s above solidus, preferable less than 5 s above solidus and most preferably less than 2 s above solidus.

Preferably, the brazing of the intermediate or the carrier intermediate is carried out at a temperature of 500 to 1000°C.

It is particularly preferred that the braze is an Ag-Cu-Ti braze. Such brazes are commercially available. An Ag-Cu-Ti braze contains only silver, copper, titanium and unavoidable impurities. Typical examples are Ticusil^{®} or Incusil ABA^{®} being Ag68.6-Cu 26.7-Ti4.5 and Ag59.0-Cu27.25-ln12.5-Ti1.25 respectively. Customized brazes are also possible. Ag70.5-Cu26.5-Ti3.0 was evaluated.

The braze preferably contains silver in an amount of 44.0 to 75.0 wt.-%, more preferably 48.0 to 71.0 wt.-% with respect to the total weight of the braze; and/or titanium in an amount of 1.0 to 10 wt.-%, more preferably 1.0 to 6.0 wt.-% with respect to the total weight of the braze.

It is particularly preferred that the process as described herein does not include a step of decarburizing the silver-graphite contact for example by heat treatment in air. It is one of the benefits of the present invention that graphite is not oxidized and converted into CO₂ gas. In other words, the preparation of a porous silver layer is not necessary.

As explained above, the present invention also provides a silver-graphite contact or a copper carrier being coated with a braze containing one or several of Ti, Hf, Zr, Cr, Si and/or V, and Cu in an amount of 24.0 wt.-% to 50.0 wt.-% with respect to the total weight of the braze, with the remainder being one or several of Ag, In, Sn and/or Ni, whereby preferably, the total weight amount of Ti, Hf, Zr, Cr, Si and/or V is between 1.0 and 10.0 wt.-% with respect to the total weight of the braze. This silver-graphite contact is obtainable by coating the silver-graphite contact with the braze at a temperature of at least the solidus temperature of the braze minus 100 K, and preferably obtainable by coating the silver-graphite contact with the braze under one or more, more preferably under all the following conditions:
a) at a temperature above the solidus temperature of the braze;
b) at a temperature of less than 80 K above the solidus temperature of the braze;
c) in a low oxygen environment, such as reduced pressure, preferably under protective atmosphere such as under argon;
d) for a time of at least 30 seconds;
e) for a time less than one hour.

Preferably, the silver-graphite contact being coated with the braze as described herein is an Ag-Cu-Ti braze. The braze preferably contains silver in an amount of 44.0 to 75.0 wt.-% with respect to the total weight of the braze; and/or titanium in an amount of 1.0 to 10 wt.-% with respect to the total weight of the braze.

In yet a further aspect, the present invention is concerned with a joint made by the process as described herein. The joint as described herein is preferably characterized by the absence of backing layers. However, the joint as described herein is further characterized by the absence of eutectic Ag-Cu bonding.

### Detailed description

In the following two particularly preferred embodiments are described.

A first particularly preferred process of connecting a silver-graphite contact with a copper carrier comprises the steps of
a) coating the silver-graphite contact with a braze under all the following conditions:
   i) within a temperature range equal or higher than the solidus temperature of the braze and simultaneously lower than the solidus temperature plus 80K;
   ii) under protective atmosphere such as under argon;
   iii) for a time of at least 30 seconds and up to one hour;
      whereby the braze contains:
      aa) one or several of Ti, Hf, Zr, Cr, Si and/or V and, further contains
      bb) Cu in an amount of 24.0 wt.-% to 50.0 wt.-% with respect to the total weight of the braze, with
      cc) the remainder being one or several of Ag, In, Sn and/or Ni, thereby producing an intermediate, and thereafter,
b) brazing the copper carrier onto the intermediate.

In this process there are preferably no intermediate steps between step a) and step b).

A second particularly preferred process of connecting a silver-graphite contact with a copper carrier comprises the steps of
a) coating the silver-graphite contact with a braze under all the following conditions:
   i) within a temperature range equal or higher than the solidus temperature of the braze and simultaneously lower than the solidus temperature plus 80K;
   ii) under protective atmosphere such as under argon;
   iii) for a time of at least 30 seconds and up to one hour;
      whereby the braze contains
      aa) one or several of Ti, Hf, Zr, Cr, Si and/or V and, further contains
      bb) Cu in an amount of 24.0 wt.-% to 50.0 wt.-% with respect to the total weight of the braze, with
      cc) the remainder being one or several of Ag, In, Sn and/or Ni, thereby producing an intermediate, and thereafter,
b) brazing the copper carrier onto the intermediate over a time of less than 2 s.

In this process there are preferably no intermediate steps between step a) and step b).

All aspects as described generally with respect to the process and/or silver-graphite contact being coated with the braze shall also hold for the above particularly preferred embodiments as far as appropriate.

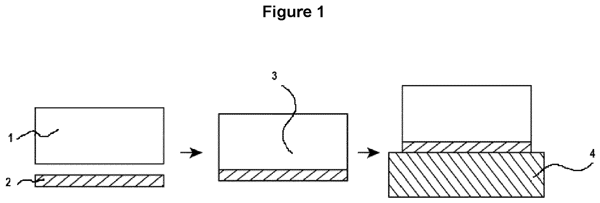

In the following the present invention is described with respect to Figure 1.

Figure 1 is a schematic of the invention using an AgC contact (1) and a braze (2) as described herein. In the first process step of coating an intermediate (3) is produced and in the second process step, the copper carrier (4) is brazed to the intermediate thereby forming a joint.

### Experimental

Ag-28Cu-2Ti braze
Solidus temperature: 775 °C

### Example 1

Ag5C contacts (5.5x7 mm) were coated in a first step with Ag-28Cu-2Ti braze at 785 °C in Argon and then inductively brazed to Cu.
Solidus temperature of Ag-28Cu-2Ti: 780 °C.
Coating time: 1 h
Brazing time: 25 s above the solidus

### Example 2

Ag5C contacts (5.5x7 mm) were coated in a first step with Ag-28Cu-2Ti braze foil at 800 °C in Argon and then resistively brazed to Cu.
Coating time: 5 min
Brazing time: 2 s above the solidus

Wetting behavior was evaluated and turned out to be good. Thus, incorporation of wetting and/or backing layers turned out to be superfluous.

While the invention has been illustrated and described in detail in the drawings and forgoing description, such illustration and description are to be considered exemplary and not restrictive. The invention is not limited to the disclosed embodiments. In view of the foregoing description and drawings it will be evident to a person skilled in the art that various modification may be made within the scope of the invention, as defined in the claims.

## Claims

1. A process of connecting a silver-graphite contact with a copper carrier comprising the steps of
a) coating the silver-graphite contact with a braze at a temperature of at least the solidus temperature of the braze minus 100 K,
whereby the braze contains
aa) one or several of Ti, Hf, Zr, Cr, Si and/or V and, further contains
bb) Cu in an amount of 24.0 wt.-% to 50.0 wt.-% with respect to the total weight of the braze, with
cc) the remainder being one or several of Ag, In, Sn and/or Ni, thereby producing an intermediate, and thereafter,
b) brazing the copper carrier onto the intermediate.

2. The process of claim 1, whereby the step of coating the silver-graphite contact with the braze thereby producing an intermediate
is carried out under one or more, preferably under all the following conditions:
a) at a temperature above the solidus temperature of the braze;
b) at a temperature of less than 80 K above the solidus temperature of the braze;
c) in a low oxygen environment, such as reduced pressure, preferably under protective atmosphere such as under argon;
d) for a time of at least 25 seconds;
e) for a time less than one hour.

3. The process according to claim 1 or claim 2, whereby the brazing of the copper carrier onto the intermediate is performed under one or more, preferably under all the following conditions:
a) at a temperature of 500 °C to 1000 °C;
b) over a time of up to 5 minutes above solidus, preferably less than 10 seconds above solidus, even more preferably less than 5 seconds above solidus and most preferably less than 2 seconds above solidus.

4. The process according to any one of the preceding claims, whereby the total weight amount of Ti, Hf, Zr, Cr, Si and/or V is between 1.0 and 10.0 wt.-% with respect to the total weight of the braze.

5. The process according to any one of the preceding claims whereby the solidus temperature of the braze is less than 850 °C, still more preferably less than 800°C and most preferably less than 650°C.

6. The process according to any one of the preceding claims, whereby the step of coating the silver-graphite contact with the braze thereby producing an intermediate is carried out at a temperature of up to 950°C.

7. The process according to any one of the preceding claims, whereby the braze for producing an intermediate is a braze powder, braze paste or a braze foil.

8. The process according to any one of the preceding claims, whereby the intermediate is brazed to the copper carrier by inductive, resistive or furnace heating.

9. The process according to any one of the preceding claims, whereby the braze is an Ag-Cu-Ti braze.

10. The process of according to claim 9, whereby the braze contains
a) silver in an amount of 44.0 to 75.0 wt.-% with respect to the total weight of the braze; and/or
b) titanium in an amount of 1.0 to 10 wt.-% with respect to the total weight of the braze.

11. A silver-graphite contact being coated with a braze, whereby the braze contains
a) one or several of Ti, Hf, Zr, Cr, Si and/or V and, further contains
b) Cu in an amount of 24.0 wt.-% to 50.0 wt.-% with respect to the total weight of the braze, with
c) the remainder being one or several of Ag, In, Sn and/or Ni,
obtainable by coating the silver-graphite contact with the braze at a temperature of at least the solidus temperature of the braze minus 100 K,
preferably obtainable by coating the silver-graphite contact with the braze under one or more, more preferably under all the following conditions:
a) at a temperature above the solidus temperature of the braze;
b) at a temperature of less than 80 K above the solidus temperature of the braze;
c) in a low oxygen environment, such as reduced pressure, preferably under protective atmosphere such as under argon;
d) for a time of at least 30 seconds;
e) for a time less than one hour.

12. The silver-graphite contact being coated with the braze according to claim 11 whereby the total weight amount of Ti, Hf, Zr, Cr, Si and/or V is between 1.0 and 10.0 wt.-% with respect to the total weight of the braze.

13. The silver-graphite contact being coated with the braze according to claim 11 or claim 12, whereby the braze is an Ag-Cu-Ti braze.

14. The silver-graphite contact with the braze according to any one of claims 11 to 13, whereby the braze contains:
a) silver in an amount of 44.0 to 75.0 wt.-% with respect to the total weight of the braze; and/or
b) titanium in an amount of 1.0 to 10 wt.-% with respect to the total weight of the braze.

15. A joint made by the process according to any one of claims 1 to 10 preferably **characterized by** the absence of eutectic Ag-Cu bonding.
